# EUROPÄISCHE PATENTANMELDUNG

(11) **EP 1 338 830 A2**
(43) Veröffentlichungstag der Anmeldung: **27.08.2003**
(21) Anmeldenummer: 03450051.2
(22) Anmeldetag: 26.02.2003
(51) Int. Cl.: F16H 57/04

(54) **Anordnung von zwei oder mehreren Getriebeeinheiten**

(30) Priorität: 26.02.2002 AT 292022002
(71) Anmelder: REFORM-WERKE BAUER & CO. GESELLSCHAFT M.B.H., A-4600 Wels (AT)
(72) Erfinder: Massak, Franz, Dipl.-Ing., 4522 Sierning (AT)
(74) Vertreter: Itze, Peter, Dipl.-Ing.

(57) **Zusammenfassung**

Die Erfindung betrifft eine Anordnung von zwei oder mehreren eigenständigen Getriebeeinheiten in einem vorzugsweise land- oder bauwirtschaftlich genutzten Fahrzeug, deren Getriebegehäuse mit Schmieröl gefüllt sind sowie Einrichtungen zur Kühlung des Schmieröles aufweisen, wobei die Getriebegehäuse (17,18,19) durch Ölleitungen (8,9a,9b,10,11,12,13,14) miteinander verbunden sind und wobei das Schmieröl zur Kühlung über die genannten Ölleitungen mittels einer Fördereinrichtung (16 oder 40) in einem Kreislauf durch die Getriebeeinheiten (2,3,4) bewegt wird.

## Beschreibung

Die Erfindung betrifft eine Anordnung von zwei oder mehreren eigenständigen Getriebeeinheiten in einem vorzugsweise land- oder bauwirtschaftlich genutzten Fahrzeug, deren Getriebegehäuse mit Schmieröl gefüllt sind sowie Einrichtungen zur Kühlung des Schmieröles aufweisen.

Im Gegensatz zur Blockbauweise herkömmlicher Traktoren, wo Motor, Schaltgetriebe, Achsantriebe sowie diverse weitere Getriebe in einem Triebwerksblock als tragende Einheit zusammengebaut sind weisen spezielle Fahrzeuge zum Einsatz in der Landoder Bauwirtschaft neben dem Antriebsmotor mehrere eigenständige Getriebeeinheiten auf. Für den Einsatz dieser Fahrzeuge, beispielsweise in extremen Hanglagen, ist eine niedrige Schwerpunktlage sowie eine optimale Verteilung des Leergewichtes des Fahrzeuges auf die einzelnen Achsen von großer Bedeutung. Diese Anforderungen werden durch die vorgenannte aufgelöste Getriebebauweise erreicht. Diese Getriebeeinheiten sind durch Antriebe miteinander verbunden und können über Kupplungen fallweise zu- und abgeschaltet werden. Dies bedeutet, dass die Antriebsleistung des Motors je nach Einsatz auf eine Getriebeeinheit konzentriert oder auf mehrere Getriebeeinheiten verteilt werden kann. So wird beispielsweise das Zapfwellengetriebe für die Front- oder die Heckzapfwelle beim Antrieb schwerer Maschinen mit einem großen Teil der Motorleistung belastet, während andere Getriebeeinheiten wie Schaltgetriebe, Verteilergetriebe, etc. dabei eine relativ geringe Belastung aufweisen. Bei Straßenfahrt verhält es sich umgekehrt. Dies führt bei den jeweils hoch belasteten Getriebeeinheiten naturgemäß zu einer starken Erwärmung des Schmieröles. Der Einbau von Wärmeaustauschern und Ölkühlern im Fahrzeug ist die logische Konsequenz.

Es ist daher Aufgabe der Erfindung für die Getriebeanordnung in vorgenannten Fahrzeugen eine kostengünstige und baulich einfache sowie Gewicht sparende Lösung für die Kühlung des Schmieröles der Getriebeeinheiten zu finden.

Die Aufgabe der Erfindung wird dadurch gelöst, dass die Getriebegehäuse durch Ölleitungen miteinander verbunden sind und dass das Schmieröl zur Kühlung über die Ölleitungen mittels einer Fördereinrichtung in einem Kreislauf durch die Getriebeeinheiten bewegt wird.

Durch diese Maßnahme wird erreicht, dass der gesamte Ölvorrat aller Getriebeeinheiten im Kreislauf bewegt wird und damit die Gesamtheit der Getriebegehäuse zur Kühlung zur Verfügung steht. Dabei erfolgt ein thermischer Ausgleich zwischen den hoch und niedrig belasteten Getriebeeinheiten. Bei Auslegung der Kühlflächen an den Getriebegehäusen entsprechend der maximal über die Getriebeeinheiten übertragbaren Leistung kann damit auf den Einbau von aufwendigen separaten Ölkühleinrichtungen verzichtet werden.

Fahrzeuge für den vorbeschriebenen speziellen Einsatz weisen in der Regel eine Fahrzeug-Hydraulikanlage zum Ansteuern diverser Funktionen bzw. zum Antrieb verschiedener Geräte auf. Eine besonders einfache und zweckmäßige Ausführung wird nach einem weiteren Merkmal der Erfindung erreicht, wenn die Getriebegehäuse als Ölbehälter einer Fahrzeug-Hydraulikanlage ausgeführt sind, und wenn als Fördereinrichtung für den Schmierölkreislauf eine Pumpe dieser Hydraulikanlage dient. Dabei wird das Schmieröl der Getriebeeinheiten auch als Hydrauliköl zum Einsatz gebracht.

Nach einem weiteren Merkmal der Erfindung ist als kostengünstige Lösung vorgesehen, dass die Getriebegehäuse an den Außenseiten Kühlrippen aufweisen und dass die Innenseite zumindest eines Getriebegehäuses im Bereich des unteren Anschlusses der Ölleitung gemeinsam mit einem antreibbaren Verzahnungsteil als Fördereinrichtung für den Kreislauf des Schmieröles ausgebildet ist. Diese einfache Gestaltung einer Fördereinrichtung für das Schmieröl wird zweckmäßigerweise bei Fahrzeugen ohne Hydraulikanlage eingesetzt, sie kann jedoch auch zusätzlich zur vorhandenen Pumpe der Fahrzeug-Hydraulik zur individuellen Steuerung des Ölstromes der jeweiligen Getriebeeinheit verwendet werden.

In verschiedenen Einzelheiten optimierte Ausführungen der Erfindung werden durch drei weitere Merkmale erreicht.

So ist vorgesehen, dass die Zufuhr des Schmieröles zu den einzelnen Getriebeeinheiten im oberen Bereich der Getriebegehäuse erfolgt und dass im jeweiligen Getriebegehäuse ein Verteiler zur Lenkung des Schmieröles zu den Schmierstellen angebracht ist.

Weiters wird im Rahmen der Erfindung vorgeschlagen, dass der Querschnitt der Ölleitungen im Bereich der Zufuhr des Schmieröles der erforderlichen Menge der jeweiligen Getriebeeinheit angepasst ist.

Schließlich ist zur Erhaltung der Qualität des Schmieröles vorgesehen, dass in dem durch die Getriebeeinheiten geführten Kreislauf des Schmieröles ein Filter eingebaut ist.

Eine funktionell besonders vorteilhafte Ausgestaltung der Erfindung wird erreicht, wenn der Kreislauf des Schmieröles für alle Getriebeeinheiten durch eine gemeinsame Fördereinrichtung mit stetigem Antrieb erfolgt und wenn zusätzlich jede mit einem zu- und abschaltbarem Antrieb ausgerüstete Getriebeeinheit eine eigene, von dieser angetriebene, Fördereinrichtung aufweist. Dies bedeutet, dass einerseits mittels der gemeinsamen Fördereinrichtung ein Zwangskreislauf des Schmieröles durch die einzelnen Getriebeeinheiten gegeben ist und andererseits die der jeweiligen Getriebeeinheit zugeordnete eigene Fördereinrichtung bei zugeschaltetem Antrieb eine dosierte Absenkung des Ölstandes im betroffenen Getriebegehäuse erzeugt. Der Vorteil dieser Anordnung liegt auch darin, dass durch den Zwangskreislauf bei abgeschaltetem Antrieb der jeweiligen Getriebeeinheit diese mit Schmieröl gefüllt ist und dadurch die gesamte Außenfläche als Kühlfläche wirksam wird. Bei zugeschaltetem Antrieb wird der Ölstand im Getriebegehäuse abgesenkt, wodurch der Wirkungsgrad des Getriebes erhöht und die Wärmebildung verringert wird.

Weitere Einzelheiten und Vorteile eines Ausführungsbeispieles der Erfindung werden an Hand der Zeichnung näher beschrieben. Es zeigen
Fig. 1 eine schematische Darstellung einer erfindungsgemäßen Anordnung;
Fig. 2 eine Außenansicht auf eine eigenständige Getriebeeinheit im unteren Bereich mit entferntem Gehäusedeckel und
Fig. 3 einen Schnitt durch die Getriebeeinheit nach der Linie A - B in Fig. 2.

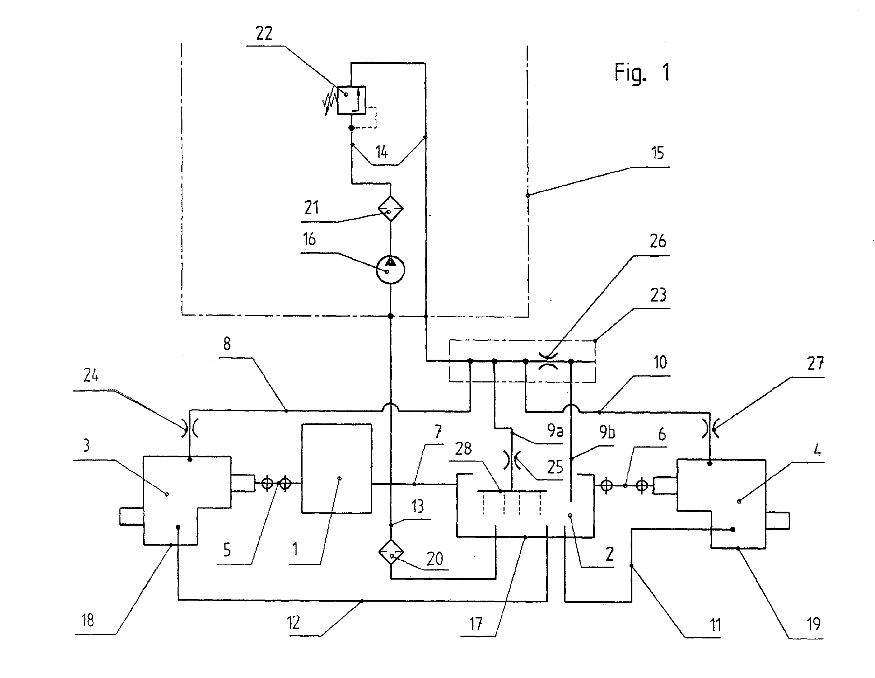

Die in Fig. 1 dargestellte Anordnung besteht aus einem Antriebsmotor (1), einem Schalt- und Verteilergetriebe (2) sowie je einem Getriebe für die Front- (3) und Heckzapfwelle (4). Der Antriebsmotor (1) ist mit den genannten eigenständigen Getriebeeinheiten (2,3,4) mittels Gelenkwellen (5,6) bzw. einer Verbindungswelle (7) antriebsverbunden. Die in einem nicht näher dargestellten Fahrzeug eingebauten Getriebeeinheiten (2,3,4) sind über Ölleitungen (8,9a,9b,10,11,12) miteinander sowie über weitere Ölleitungen (13,14) mit einer Fahrzeug- Hydraulikanlage (15) zu einem Ölkreislauf verbunden. Dieser Ölkreislauf wird in dem dargestellten Ausführungsbeispiel durch eine Pumpe (16) der Fahrzeug- Hydraulikanlage (15) erzeugt, wobei die Getriebegehäuse (17,18,19) der Getriebeeinheiten (2,3,4) als Ölbehälter dienen. Das Schmieröl der Getriebeeinheiten (2,3,4) dient dabei gleichzeitig als Hydrauliköl und wird von der Pumpe (16) über die Ölleitung (13) aus dem als Ölbehälter dienenden Getriebegehäuse (17) angesaugt, durch ein Saugfilter (20) und ein Druckfilter (21) gereinigt und über die Ölleitung (13) sowie ein Druckbegrenzungsventil (22) einem Ölverteiler (23) zugeführt. Dieser Ölverteiler (23) ist wiederum über die Ölleitungen (8,9a,9b,10) mit der Oberseite der Getriebeeinheiten (2,3,4) verbunden. Wie am Beispiel des Schalt- und Verteilergetriebes (2) ersichtlich ist erfolgt dabei die Ölzufuhr zu den Schmierstellen einerseits direkt über die Ölleitung (9b) und andererseits über einen an die Ölleitung (9a) angeschlossenen Verteiler (28). Der Ölkreislauf wird durch die Verbindung der Unterseiten der Getriebeeinheiten (2,3,4) mittels der Ölleitungen (11,12) geschlossen. Durch diese Anordnung wird erreicht, dass das Schmier- bzw. Hydrauliköl durch die Pumpe (16) über die Ölleitung (13) angesaugt, über die Ölleitungen (13,8,9a,9b,10) den Getriebeeinheiten (2,3,4) zugeführt und über die Ölleitungen (11,12) wieder rückgeführt wird. Die Zufuhr des Öles zu den einzelnen Getriebeeinheiten (2,3,4) erfolgt dabei mengengeregelt, d.h. in den Ölleitungen (8,9a,9b,10) sind dem jeweilig erforderlichen Fördervolumen entsprechende Drosseln (24,25,26,27) eingebaut.

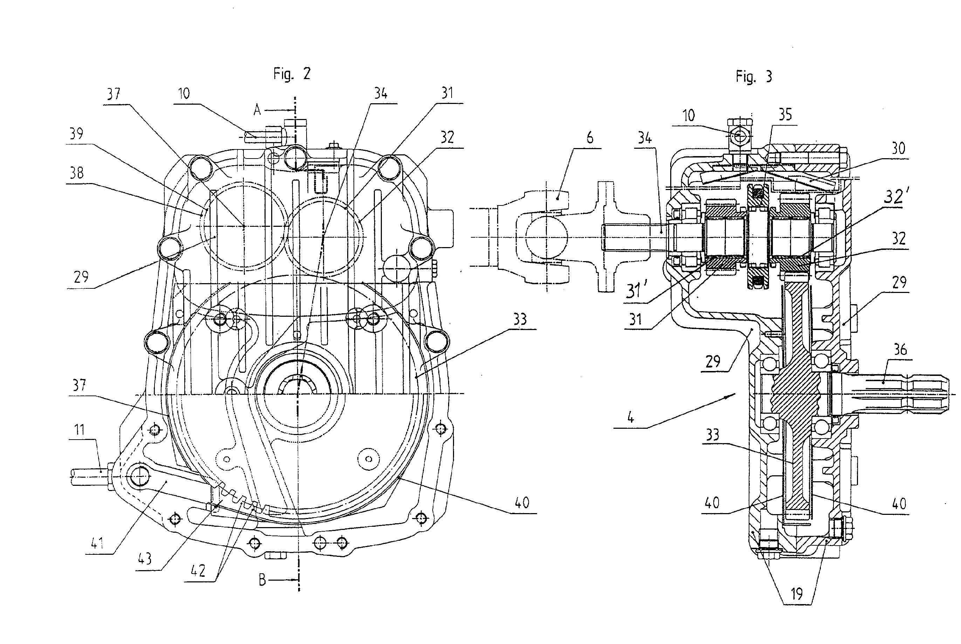

Die in den Fig. 2 und 3 dargestellte eigenständige Getriebeeinheit (4), im Ausführungsbeispiel ein Zapfwellengetriebe, weist ein zweiteiliges Getriebegehäuse (19) auf. An den Außenseiten des Getriebegehäuses (19) sind eine größere Anzahl von Kühlrippen (29) angebracht. Im oberen Bereich des Getriebegehäuses (19) ist zur Ölzufuhr die Ölleitung (10) mit einem Verteiler (30), im unteren Bereich zur Ölableitung die Ölleitung (11) befestigt. Wie aus Fig. 1 ersichtlich ist wird das Zapfwellengetriebe (4) mittels einer Gelenkwelle (6) über das Schalt- und Verteilergetriebe (2) vom Antriebsmotor (1) angetrieben. Das Zapfwellengetriebe (4) ist als zweistufiges Getriebe ausgeführt, dessen Zahnräder (31,32,33) durch eine auf deren Antriebswelle (34) verschiebbar gelagerte Schaltmuffe (35) je nach Schaltstellung die Zapfwelle (36) mit unterschiedlicher Drehzahl antreiben können. In der in Fig. 3 dargestellten Schaltstellung der Schaltmuffe (35) ist der Antrieb zur Zapfwelle (36) abgeschaltet, d. h., die Zapfwelle (36) und die sie antreibenden Zahnräder (31,32,33) sind im Stillstand. Das mit der Zapfwelle (36) direkt verbundene Zahnrad (33) ist mit einem am Getriebegehäuse (19) befestigten Blechmantel (37) umgeben. Dieser Blechmantel (37) ist oben offen und weist unten einen Auslass zu einem mit der Ölleitung (11) verbundenen Förderkanal (38) des Getriebegehäuses (19) auf. Bei zugeschaltetem Antrieb des Zapfwellengetriebes (4) dient das umlaufende Zahnrad (33) mit seinen Zahnlücken (39) in Verbindung mit dem Blechmantel (37) sowie dem als Förderkanal (38) ausgebildeten Getriebegehäuse (19) als Fördereinrichtung (40) für den Kreislauf des Öles.

Wie bereits beschrieben kann diese Fördereinrichtung (40) alleine oder auch gemeinsam mit der Pumpe (16) einer Hydraulikanlage (15) betrieben werden.

## Patentansprüche

1. Anordnung von zwei oder mehreren eigenständigen Getriebeeinheiten in einem vorzugsweise land- oder bauwirtschaftlich genutzten Fahrzeug, deren Getriebegehäuse mit Schmieröl gefüllt sind sowie Einrichtungen zur Kühlung des Schmieröles aufweisen, **dadurch gekennzeichnet, dass** die Getriebegehäuse (17,18,19) durch Ölleitungen (8,9a,9b,10,11,12,13,14) miteinander verbunden sind und dass das Schmieröl zur Kühlung über die genannten Ölleitungen mittels einer Fördereinrichtung (16 oder 40) in einem Kreislauf durch die Getriebeeinheiten (2,3,4) bewegt wird.

2. Anordnung nach Anspruch 1, **dadurch gekennzeichnet, dass** die Getriebegehäuse (17,18,19) als Ölbehälter einer Fahrzeug-Hydraulikanlage (15) ausgeführt sind, und dass als Fördereinrichtung eine Pumpe (16) dieser Hydraulikanlage (16) dient.

3. Anordnung nach Anspruch 1 oder 2, **dadurch gekennzeichnet, dass** die Getriebegehäuse (17,18,19) an den Außenseiten Kühlrippen (29) aufweisen und dass die Innenseite zumindest eines Getriebegehäuses (19) im Bereich des unteren Anschlusses der Ölleitung (11) gemeinsam mit einem antreibbaren Verzahnungsteil (33) als Fördereinrichtung (40) für den Kreislauf des Schmieröles ausgebildet ist.

4. Anordnung nach den Ansprüchen 1 bis 3, **dadurch gekennzeichnet, dass** die Zufuhr des Schmieröles zu den einzelnen Getriebeeinheiten (2,3,4) im oberen Bereich der Getriebegehäuse (17,18,19) erfolgt und dass im jeweiligen Getriebegehäuse ein Verteiler (28,30) zur Lenkung des Schmieröles zu den Schmierstellen angebracht ist.

5. Anordnung nach den Ansprüchen 1 bis 4, **dadurch gekennzeichnet, dass** der Querschnitt der Ölleitungen (8,9a,9b,10) im Bereich der Zufuhr des Schmieröles durch Drosseln (24,25,26,27) der erforderlichen Menge der jeweiligen Getriebeeinheit (2,3,4) angepasst ist.

6. Anordnung nach den Ansprüchen 1 bis 5, **dadurch gekennzeichnet, dass** in dem durch die Getriebeeinheiten (2,3,4) geführten Kreislauf des Schmieröles zumindest ein Filter (20,21) eingebaut ist.

7. Anordnung nach einem oder mehreren der Ansprüche 1 bis 6, **dadurch gekennzeichnet, dass** der Kreislauf des Schmieröles für alle Getriebeeinheiten (2,3,4) durch eine gemeinsame Fördereinrichtung (16) mit stetigem Antrieb erfolgt und dass zusätzlich jede mit einem zu- und abschaltbarem Antrieb ausgerüstete Getriebeeinheit (4) eine eigene, von dieser angetriebene, Fördereinrichtung (40) aufweist.
